# EUROPÄISCHE PATENTSCHRIFT

(11) **EP 1 613 890 B1**
(45) Veröffentlichungstag und Bekanntmachung des Hinweises auf die Patenterteilung: **11.04.2007**
(21) Anmeldenummer: 04722817.6
(22) Anmeldetag: 24.03.2004
(51) Int. Cl.: F16M 11/10, F16M 11/28, F16B 7/14, F16B 7/10

(54) **STANDFUSS**
STAND
PIED

(30) Priorität: 04.04.2003 DE 10315612
(43) Veröffentlichungstag der Anmeldung: 11.01.2006
(73) Patentinhaber: Rittal GmbH & Co. KG, 35745 Herborn (DE)
(72) Erfinder: ROOT, Paul, 35080 Bad Endbach (DE)
(74) Vertreter: Fleck, Hermann-Joseph
(86) Internationale Anmeldenummer: PCT/EP2004/003094
(87) Internationale Veröffentlichungsnummer: WO 2004/088196

(56) Entgegenhaltungen:
- DE-U- 29 717 853
- FR-A- 2 332 449
- GB-A- 327 802
- GB-A- 2 352 534
- US-A- 3 690 608
- US-A1- 2002 148 940

## Beschreibung

Die Erfindung bezieht sich auf einen Standfuß mit einer auf einem Fußabschnitt angebrachten, mindestens ein Profilelement aufweisenden Säule, an deren oberem Endabschnitt eine Kopfeinheit mit einem um eine horizontale Schwenkachse kippbaren und in einer gewünschten Kippstellung festspannbaren Schwenkelement befestigt ist, welches auf seiner Oberseite ein Aufnahmeelement trägt, wobei die Kopfeinheit einen in einen längs verlaufenden Hohlraum des Profilelementes ragenden, ortsfest bezüglich des oberen Endabschnittes des Profilelementes angebrachten Zapfen aufweist, der mit einem nach oben offenen vertikalen Spalt versehen ist, in den das als planparallele Platte ausgebildete Schwenkelement eingesetzt und gelagert ist, wobei die Stärke des Schwenkelementes an die lichte Weite des Spalts angepasst ist und die Schwenkachse den Zapfen mit dem Schwenkelement im Bereich des Spaltes in Normalenrichtung durchragt und das Schwenkelement über die obere Stirnseite des Zapfens hinausragt.

Ein derartiger Standfuß ist in der GB 327,802 A angegeben. Bei diesem bekannten Standfuß ist auf einem Fußabschnitt eine teleskopartig verstellbare Säule angebracht, an deren oberem Endabschnitt eine Kopfeinheit mit einem um eine horizontale Schwenkachse kippbaren und in einer gewünschten Kippstellung arretierbaren Schwenkelement befestigt ist, welches auf seiner Oberseite ein Aufnahmeelement für einen schwenkbar zu lagernden Gegenstand trägt. Die Kopfeinheit ist mit einem Zapfenabschnitt in den hohlen Endabschnitt der Säule eingesetzt und mit einem nach oben offenen vertikalen Spalt versehen, in dem das plattenförmige Schwenkelement schwenkbar gelagert ist, wobei die Schwenkachse den Zapfen mit dem Schwenkelement in Normalenrichtung durchragt und das Schwenkelement über die obere Stirnseite des Zapfens hinausragt. Zum Verstellen und Arretieren der Schwenkneigung ist in dem über die Säule herausragenden Abschnitt des Zapfens unterhalb des plattenartigen Schwenkelementes ein Verstellteil mit einer Schnecke gelagert, deren Gewinde in eine im unteren Bereich des Schwenkelementes ausgebildete Zahnung eingreift.

Ein Standfuß mit ähnlich ausgebildetem Schwenkmechanismus an einer Kopfeinheit ist in der US 3,690,608 gezeigt.

Bei einem in der GB-A 2 352 534 gezeigten weiteren Standfuß ist im oberen Endabschnitt einer teleskopartig verstellbaren Säule ebenfalls eine schwenkbare Kopfeinheit mit einem um eine horizontale Schwenkachse schwenkbaren plattenartigen Schwenkelement vorgesehen, an dem eine Aufnahme für ein Bildschirm angebracht ist. Nähere Ausführungen zur Anbringung der Kopfeinheit an dem Endabschnitt und einer Arretiervorrichtung sind in dieser Druckschrift nicht gemacht.

Die US 2002/0148940 A1 zeigt ein schwenkbar auf einer Stütze angebrachtes Kochgerät, beispielsweise einen Grill, wobei eine Aufnahmeeinheit mittels eines Zapfens in einem Hohlraum eines oberen Endabschnittes eingesetzt und darin um eine Vertikalachse drehbar gelagert und feststellbar ist. Die Trägereinheit weist an einem beidseitig über den Zapfen überstehenden Horizontalteil seitlich angebrachte Vertikalabschnitte auf, in denen die horizontale Schwenkachse zur Aufnahme des Kochgerätes gelagert ist. An beiden Vertikalabschnitten sind zum Arretieren einer Schwenkstellung Klemmschrauben angeordnet, die mit einer bogenförmigen Schlitzführung zusammenarbeiten. Zum Festklemmen müssen beidseitig die Klemmschrauben in gewählter Schwenkstellung gespannt werden, zum Lösen müssen beide Klemmschrauben gelöst werden.

Die DE 297 17 853 U1 zeigt bei einem Heimtrainer einen Klemmmechanismus für teleskopartig ineinander verstellbare Profilteile.

Ein weiterer Standfuß in Form eines Stativs zum Halten von Gegenständen ist in der EP 0 555 685 A1 angegeben. Bei diesem bekannten Standfuß ist am oberen Teil einer schmalen Säule eine um eine Schwenkachse kippbare Kopfeinheit angebracht, wobei der obere Endabschnitt der Säule von einem relativ aufwändig ausgestalteten Befestigungsabschnitt übergriffen ist.

Der Erfindung liegt die Aufgabe zugrunde, einen Standfuß der eingangs angegebenen Art bereit zu stellen, bei dem die Kopfeinheit bei einfachem Aufbau stabil an der Säule montiert ist und eine sichere Funktion und einfache Handhabung erreicht werden.

Diese Aufgabe wird mit den Merkmalen des Anspruches 1 gelöst. Hierbei ist vorgesehen, dass im Spaltbereich des Zapfens parallel zu der Schwenkachse eine in den Spalt im Bereich des eingesetzten Schwenkelementes mündende Klemmbohrung eingebracht ist und dass quer durch das Profilelement ein ein Gewinde aufweisender Klemmbolzen eines manuell verstellbaren Klemmhebels geführt ist, der in ein in dem Profilelement eingebrachtes Gewinde oder separates Gewindestück eingedreht ist und mit seiner Stirnseite gegen das Schwenkelement zum Festlegen einer gewünschten Neigung des Aufnahmeelementes festspannbar ist.

Die Säule kann bei diesem Aufbau stabil ausgestaltet werden und die Anbringung der Kopfeinheit ist stabil und einfach ausgeführt. Beispielsweise können dadurch auch größere Gerätegehäuse auf dem Aufnahmeelement angebracht werden. Dabei werden auch eine sichere Funktion und einfache Handhabung erreicht.

Für eine einfache, stabile Montage sind ferner die Maßnahmen vorteilhaft, dass an der oberen Stirnseite oder dem seitlichen Endbereich des Zapfens ein flanschartiges oder ringförmiges Befestigungsstück angebracht ist, das den Zapfen seitlich bundartig überragt und mit dem der Zapfen auf der oberen Stirnseite des Profilelementes befestigt ist.

Hierbei besteht ein vorteilhafter Aufbau darin, dass das Befestigungsstück an dem Profilelement angeschweißt oder angeschraubt ist, wobei zum Anschrauben in dem Hohlraum des Profilelementes längsverlaufende Schraubkanäle vorgesehen sind.

Die Montage bei stabilem Aufbau wird weiterhin dadurch begünstigt, dass das Gewindestück in eine in dem Hohlraum des Profilelements eingebrachte, längsverlaufende Aufnahmenut eingesetzt ist.

Ist vorgesehen, dass die Säule aus einem an dem Fußabschnitt angebrachten Außenprofil und einem darin teleskopartig verschieblich gelagerten, in verschiedenen Stellungen festlegbaren Innenprofil zusammengesetzt ist und dass das Profilelement von dem Innenprofil gebildet ist, können leicht verschiedene Innenprofile mit daran angebrachten unterschiedlichen Kopfteilen für verschiedene Verwendungszwecke eingesetzt werden. Dadurch ergeben sich weitere einfache Montagemöglichkeiten.

Dabei besteht eine weitere vorteilhafte Ausgestaltung darin, dass die Innenkontur des Außenprofils im Querschnitt abschnittsweise an die Außenkonturen in ihrer Querschnittsform unterschiedlicher Innenprofile derart angepasst ist, dass die verschiedenen Innenprofile jeweils mit mindestens drei in Umfangsrichtung voneinander beabstandeten Außenkonturabschnitten an mindestens drei gegeneinander versetzten Innenkonturabschnitten in Querrichtung unverkippbar, über die Länge flächig, abgestützt sind.

Die Erfindung wird nachfolgend anhand von Ausführungsbeispielen unter Bezugnahme auf die Zeichnungen näher erläutert. Es zeigen:
- Fig. 1: einen Standfuß mit höhenverstellbarer Säule in perspektivischer Ansicht,
- Fig. 2a) bis 2c): Querschnitte der Säule nach Fig. 1 mit gleichem Außenprofil und unterschiedlichen Innenprofilen,
- Fig. 3: einen Klemmbereich der Säule in auseinandergenommenem Zustand der Klemmteile in perspektivischer Ansicht,
- Fig. 4: den Klemmbereich der Säule im Querschnitt,
- Fig. 5: eine perspektivische Darstellung der Säule mit einer Gasfeder in teilweise auseinandergenommenem Zustand,
- Fig. 6: den Bereich einer Kopfeinheit in abgenommenem Zustand in perspektivischer Darstellung und
- Fig. 7: eine andere perspektivische Darstellung der Kopfeinheit nach Fig. 6.

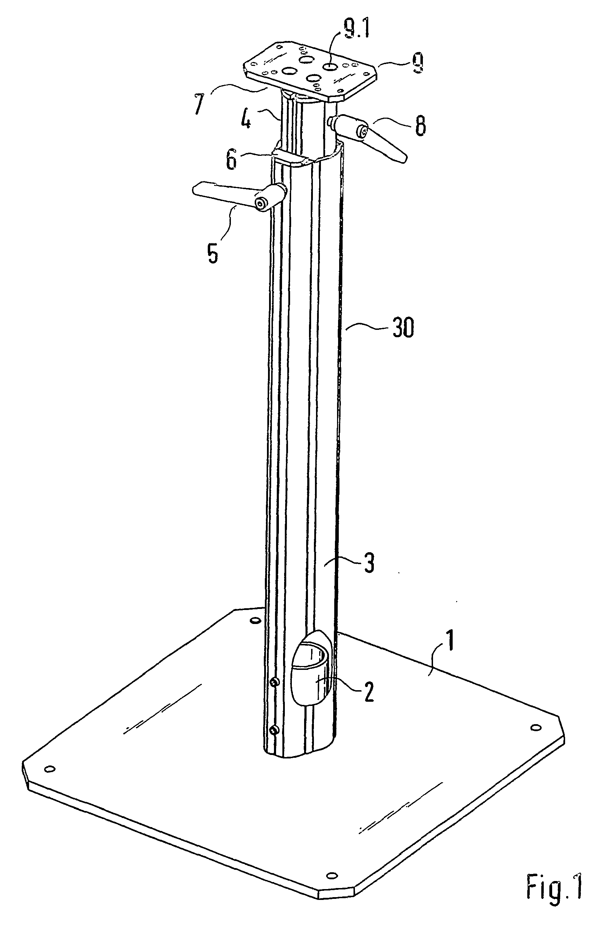

Ein in Fig. 1 gezeigter höhenverstellbarer Standfuß weist eine flache, einteilige Bodenplatte 1 mit einer darauf zentral angebrachten vertikalen Stütze 2 auf, an der ein aufgeschobenes Außenprofil 3 mit an die Stütze 2 angepasstem Innenquerschnitt befestigt ist. Das Außenprofil 3 ist Bestandteil einer höhenverstellbaren Säule 30, die als weiteren Bestandteil ein in das Außenprofil 3 eingeschobenes und darin teleskopartig höhenverstellbares Innenprofil 4 aufweist. Das Innenprofil 4 weist ein an seinem oberen Endbereich angebrachtes Kopfteil 7 mit einem um eine horizontale Achse neigbaren plattenartigen Aufnahmeelement 9 auf. Das Innenprofil 4 kann in dem Außenprofil 3 kontinuierlich höhenverstellt und in gewünschter Höhe mit einem Klemmmechanismus festgelegt werden, der einen manuell betätigbaren Klemmhebel 5 und ein von diesem quer zur Längsachse verstellbares Klemmelement aufweist. Zum Feststellen des Aufnahmeelementes 9 in einer gewünschten Neigungsstellung ist ein weiterer Klemmhebel 8 vorgesehen. Das plattenartige Aufnahmeelement 9 weist Befestigungsbohrungen 9.1 sowie weitere Befestigungsbohrungen auf zum Anbringen eines Gerätegehäuses oder einer Ablageplatte.

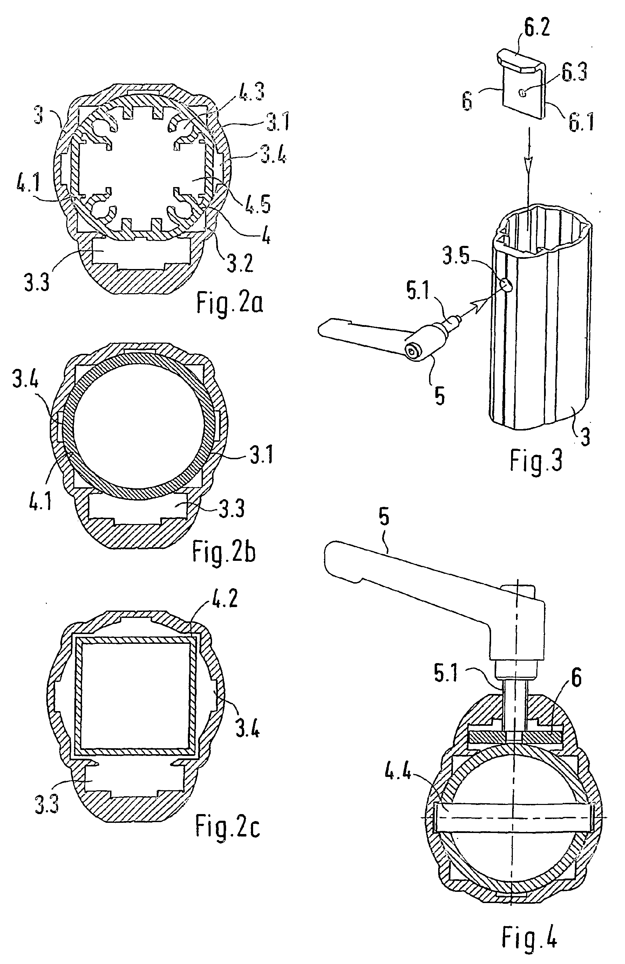

Wie aus den Fig. 2a), b) und c) ersichtlich, weist das Außenprofil 3 im Querschnitt verschiedene Innenkonturabschnitte 3.1, 3.2 auf, die an unterschiedliche Außenkonturabschnitte 4.1, 4.2 verschiedener Innenprofile 4 abschnittsweise angepasst sind und das Innenprofil 4 auf mindestens drei Seiten seitlich derart abstützen, dass das Innenprofil unverkippbar und in Längsrichtung stabil verschiebbar geführt ist, wobei sich mit den Innenkonturabschnitten 3.1, 3.2 und den komplementären Außenkonturabschnitten 4.1, 4.2, über die Länge betrachtet, flächenhafte Führungsabschnitte ergeben, da der Querschnitt des Außenprofils über seine Länge gleich bleibt.

Bei dem Ausführungsbeispiel nach Fig. 2a) weist die Innenkontur des Außenprofils 3 gerundete tnnenkonturabschnitte 3.1 sowie eckige Innenkonturabschnitte 3.2 auf, wobei die gerundeten Innenkonturabschnitte 3.1 voneinander beabstandet auf einer Kreisbahn liegen und ein im Wesentlichen im Querschnitt kreisförmiges Innenprofil 4 mit auf einer entsprechenden Kreisbahn liegenden gerundeten miteinander zusammenhängenden Außenkonturabschnitten 4.1 auf verschiedenen Seiten einfassen, so dass sich rundum eine kippstabile Abstützung des Innenprofils 4 in dem Außenprofil 3 ergibt. Beispielsweise sind vier größere und zwei kleinere Innenkonturabschnitte 3.1 vorhanden, die um das Innenprofil 4 um mehr als 180° zum Gewährleisten der kippstabilen Abstützung verteilt sind. Das Innenprofil 4 ist lediglich auf zwei gegenüberliegenden Längsseiten abgeflacht und weist in seinem Inneren längs verlaufende Schraubkanäle 4.3 auf, um darauf stirnseitig ein Montageelement des Kopfteils 7 zu montieren. Bei diesem Ausführungsbeispiel lässt sich das Innenprofil 4 um die vertikale bzw. längsverlaufende Achse in dem Außenprofil 3 drehen. Soll ein Drehen um die vertikale Achse vermieden werden, kann, entsprechend Fig. 4, durch das Innenprofil 4 ein Querzapfen 4.4 geführt werden, der z.B. beidseitig über die Außenseite des Innenprofils 4 vorsteht und in beiderseitige Haltenuten 3.4 ragt, die in der Innenkontur des Außenprofils 3 ausgebildet sind.

Wie Fig. 2b) zeigt, kann als Innenprofil 4 auch ein einfaches Rohrprofil mit kreisförmigem Querschnitt verwendet werden, das mit seinen Außenkonturabschnitten 4.1 in entsprechender Weise von den gerundeten Innenkonturabschnitten 3.1 kippsicher und gleitend geführt abgestützt ist, wie das Innenprofil 4 nach Fig. 2a). Auch hierbei kann entsprechend Fig. 4 eine Drehsicherung mit einem Querzapfen 4.4 wie bei dem Ausführungsbeispiel nach Fig. 2a) vorgesehen sein.

Bei dem Ausführungsbeispiel nach Fig. 2c) ist in das Außen profil 3 ein im Wesentlichen quadratisches Innenprofil 4 eingesetzt, wobei vier in der Innenkontur des Außenprofils 3 ausgebildete eckige Innenkonturabschnitte 3.2 zur kippstabilen, gleitend geführten Lagerung des Innenprofils 4 unter Einfassung der Eckbereiche des Innenprofils 4 genutzt sind. Ähnlich können in dem Außenprofil 3 auch andere eckige Innenkonturabschnitte ausgebildet sein, um z.B. ein im Querschnitt rechteckförmiges, dreieckförmiges oder anderes mehreckförmiges Innenprofil 4 geführt aufzunehmen.

Die gerundeten Innenkonturabschnitte 3.1 müssen auch nicht kreisabschnittsförmig ausgebildet sein und auf einer Kreisbahn liegen, sondern können beispielsweise einem im Querschnitt ovalen Innenprofil angepasst sein.

Wie die Fig. 3 und 4 auch im Zusammenhang mit den Fig. 2a) bis 2c) zeigen, ist in der Innenkontur des Außenprofils 3 ferner eine vorzugsweise T-förmige Klemmnut 3.3 mit einer zum Inneren hin gelegenen Öffnung ausgebildet, in die das Klemmelement 6 des Klemmmechanismus zum Festlegen des Innenprofils 4 in einer gewünschten Höheneinstellung eingesetzt ist. Das Klemmelement 6 liegt mit einem Klemmplattenabschnitt 6.1 in der Klemmnut 3.3 und ist auf der oberen Stirnseite des Außenprofils 3 mittels einer nach außen ragenden Haltenase 6.2 sicher gegen ein Abrutschen in der Klemmnut 3.3 gehalten. Im Bereich des Klemmplattenabschnittes 6.1, und zwar einer darin eingebrachten Haltebohrung 6.3 des Klemmelementes 6 ist in dem Außenprofil 3 eine quer verlaufende Gewindebohrung 3.5 eingebracht, in die ein Gewindezapfen 5.1 des Klemmhebels 5 eingedreht ist, der mit einem Endbereich geringeren Durchmessers in die Haltebohrung 6.3 ragt und mit einem flanschartigen Absatz des Gewindezapfens 5.1 auf der Außenseite des Klemmplattenabschnittes 6.1 aufliegt, so dass das Klemmelement 6 bei Eindrehen des Gewindezapfens 5.1 nach innen verstellt wird und das Innenprofil 4 in dem Außenprofil 3 festklemmt.

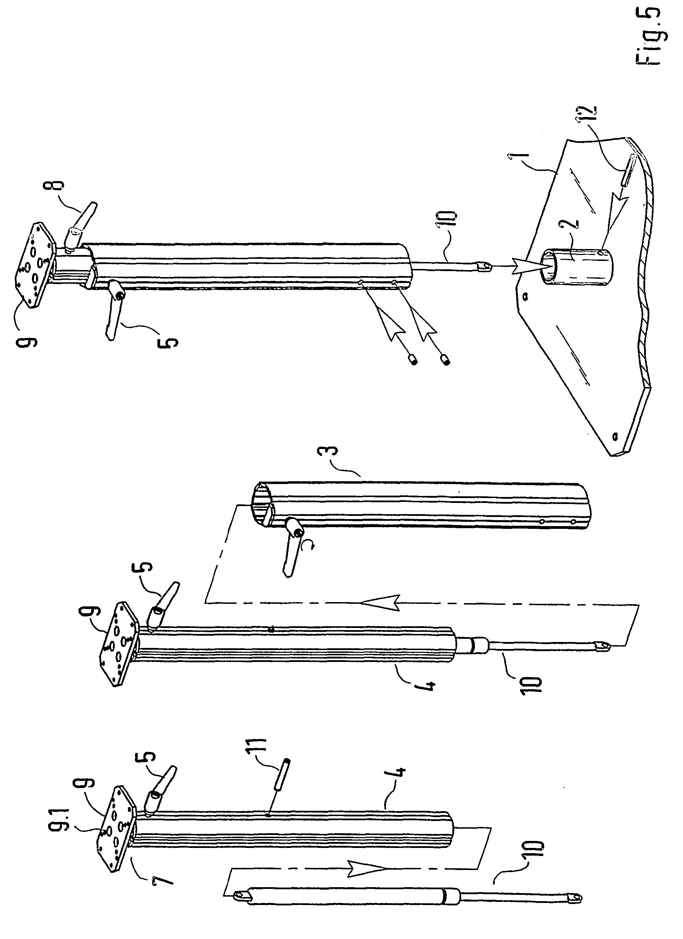

Bei dem in Fig. 5 gezeigten Aufbau ist das Innenprofil 4 mittels einer Gasfeder 10 an dem Fußabschnitt abgestützt, so dass ein Anheben des Innenprofils 4 mit dem Aufnahmeelement 9 und einem darauf befindlichen Gegenstand bzw. Gerät leicht möglich ist. Die Gasfeder 10 ist mittels mindestens eines Befestigungsbolzens 11 in dem hohlen Innenprofil 4 und andererseits mittels mindestens eines weiteren Befestigungsbolzens 12 in der hohlen Stütze 2 festgelegt, wodurch sich eine einfache Montage ergibt. Auch das Außenprofil 3, das mit seiner unteren Stirnseite auf der Bodenplatte 1 abgestützt ist, kann auf einfache Weise mittels Befestigungsbolzen bzw. Schrauben an der Stütze 2 festgelegt werden.

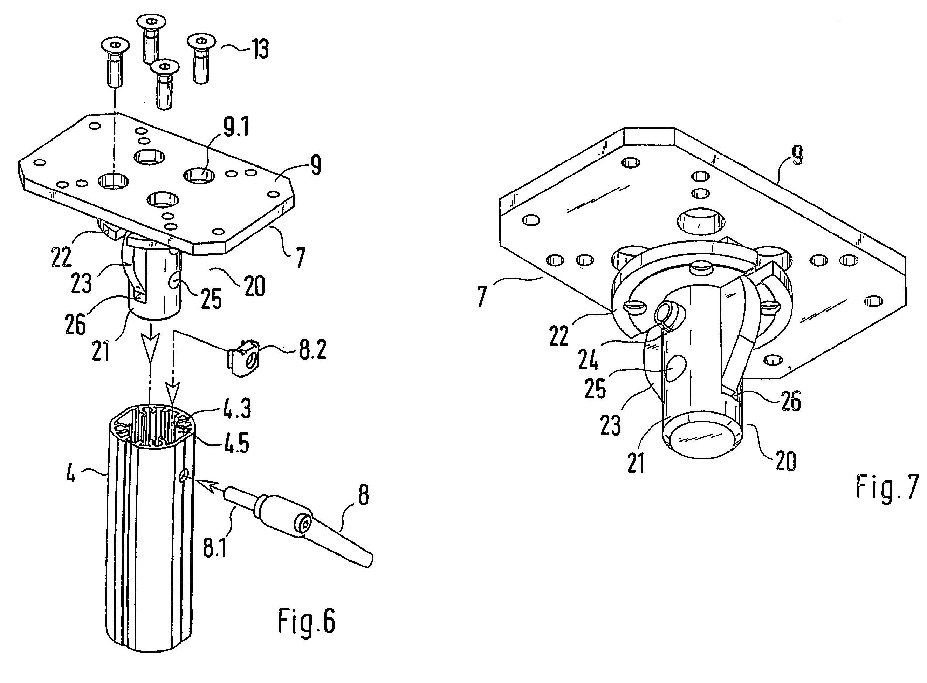

Die Fig. 6 zeigt den oberen Abschnitt des Innenprofils 4 mit dem darin einsetzbaren Kopfteil bzw. der Kopfeinheit 7 näher, wobei die Kopfeinheit 7 abgenommen ist. Die Kopfeinheit 7 weist eine Verstelleinheit 20 zur Neigungsverstellung des z.B. plattenförmigen Aufnahmeelementes 9 auf. Die Verstelleinheit 20 weist einen unter dem Aufnahmeelement 9 angeordneten vertikalen Zapfen 21 auf, der in den inneren Hohlraum des Innenprofils 4 möglichst spielfrei eingesetzt wird, wobei in dem Hohlraum des Innenprofils 4 nach innen vorstehende Halterippen angeordnet sind, die sich an dem Außenumfang des Zapfens 21 abstützen. Unter anderem sind in den in den Hohlraum des Innenprofils 4 vorstehenden Rippen auch die bereits genannten, in die oberen Stirnseite mündenden Schraubkanäle 4.3 eingebracht. Ferner ist in dem inneren Hohlraum des Innenprofils 4 mindestens eine in Längsrichtung verlaufende Aufnahmenut 4.5 zum Einsetzen eines Gewindestückes 8.2 in Form einer Käfigmutter ausgebildet.

Wie insbesondere auch aus Fig. 7 ersichtlich, weist der z.B. zylinderförmige Zapfen 21 in seinem Durchmesserbereich einen nach oben offenen Spalt 26 auf, in den ein als planparallele Platte ausgebildetes Schwenkelement 23 um eine horizontale Schwenkachse 24 schwenkbar eingesetzt ist. Die Stärke des Schwenkelementes 23 ist an die lichte Weite des von ebenfalls planparallelen Seitenflächen begrenzten Spaltes 26 derart angepasst, dass sich das Schwenkelement 23 leicht und spielfrei verschwenken lässt. Die Schwenkachse 24 ist in Normalenrichtung zu dem plattenförmigen Schwenkelement 23 durch den Zapfen 21 und das Schwenkelement 23 geführt. Das Schwenkelement 23 ragt nach oben über den Zapfen 21 vor und trägt auf seiner Oberseite das daran befestigte Aufnahmeelement 9, so dass dieses mit dem Schwenkelement 23 kippbar ist.

In dem Zapfen 21 ist weiterhin parallel zu der Schwenkachse 24 eine Klemmbohrung 25 im Bereich des plattenförmigen Schwenkelementes 23 eingebracht, in die ein Klemmbolzen 8.1 des Klemmhebels 8 hinein ragt, wobei der mit einem Gewinde versehene Klemmbolzen 8.1 in dem in die Aufnahmenut 4.5 eingesetzten Gewindestück 8.2 soweit verstellbar ist, dass er mit seiner Stirnseite auf dem Schwenkelement 23 zum Festlegen einer gewünschten Neigestellung festspannbar ist. Dadurch ergibt sich ein einfacher, sicherer Klemmmechanismus zum Fixieren des Schwenkelementes 23 und damit auch des Aufnahmeelements 9 in der gewünschten Neigestellung.

Der Kopfteil bzw. die Kopfeinheit 7 wird mittels eines Befestigungsstückes 22 auf der Stirnseite des Innenprofils 4 z.B. mittels Schrauben oder durch Schweißen befestigt. Hierzu ist das Befestigungsstück 22 plattenförmig oder ringförmig ausgebildet und im oberen Endbereich bzw. auf der Stirnseite des Zapfens 21 angebracht und überragt diesen umfangsseitig. Zum Festschrauben besitzt das Befestigungsstück 22 mit den Schraubkanälen 4.3 korrespondierende Löcher, so dass es mittels in die Schraubkanäle 4.3 eindrehbarer Schrauben mit dem Innenprofil 4 stabil verbindbar ist. Weitere Befestigungsschrauben 13 sind vorgesehen, um auf dem Aufnahmeelement 9 an den Befestigungsbohrungen 9.1 oder weiteren Befestigungsbohrungen eine Ablageplatte oder Gerätegehäuse anzubringen.

## Patentansprüche

1. Standfuß mit einer auf einem Fußabschnitt (1, 2) angebrachten, mindestens ein Profilelement (4) aufweisenden Säule (30), an deren oberem Endabschnitt eine Kopfeinheit (7) mit einem um eine horizontale Schwenkachse (24) kippbaren und in einer gewünschten Kippstellung festspannbaren Schwenkelement (23) befestigt ist, welches auf seiner Oberseite ein Aufnahmeelement (9) trägt, wobei die Kopfeinheit (7) einen in einen längs verlaufenden Hohlraum des Profilelementes (4) ragenden, ortsfest bezüglich des oberen Endabschnittes des Profilelementes angebrachten Zapfen (21) aufweist, der mit einem nach oben offenen vertikalen Spalt (26) versehen ist, in den das als planparallele Platte ausgebildete Schwenkelement (23) eingesetzt und gelagert ist, wobei die Stärke des Schwenkelementes (23) an die lichte Weite des Spalts (26) angepasst ist und die Schwenkachse (24) den Zapfen (21) mit dem Schwenkelement (23) im Bereich des Spaltes (26) in Normalenrichtung durchragt und das Schwenkelement (23) über die obere Stirnseite des Zapfens (21) hinausragt,
**dadurch gekennzeichnet,**
**dass** im Spaltbereich des Zapfens (21) parallel zu der Schwenkachse (24) eine in den Spalt (26) im Bereich des eingesetzten Schwenkelementes (23) mündende Klemmbohrung (25) eingebracht ist und
**dass** quer durch das Profilelement (4) ein ein Gewinde aufweisender Klemmbolzen (8.1) eines manuell verstellbaren Klemmhebels (8) geführt ist, der in ein in dem Profilelement eingebrachtes Gewinde oder separates Gewindestück (8.2) eingedreht ist und mit seiner Stirnseite gegen das Schwenkelement (23) zum Festlegen einer gewünschten Neigung des Aufnahmeelementes (9) festspannbar ist.

2. Standfuß nach Anspruch 1,
**dadurch gekennzeichnet,**
**dass** an der oberen Stirnseite oder dem seitlichen Endbereich des Zapfens (21) ein flanschartiges oder ringförmiges Befestigungsstück (22) angebracht ist, das den Zapfen (21) seitlich bundartig überragt und mit dem der Zapfen (21) auf der oberen Stirnseite des Profilelementes (4) befestigt ist.

3. Standfuß nach Anspruch 2,
**dadurch gekennzeichnet,**
**dass** das Befestigungsstück (22) an dem Profilelement (4) angeschweißt oder angeschraubt ist, wobei zum Anschrauben in dem Hohlraum des Profilelementes (4) längs verlaufende Schraubkanäle (4.3) vorgesehen sind.

4. Standfuß nach einem der vorhergehenden Ansprüche,
**dadurch gekennzeichnet,**
**dass** das Gewindestück (8.2) in eine in dem Hohlraum des Profilelementes (4) eingebrachte, längs verlaufende Aufnahmenut (4.5) eingesetzt ist.

5. Standfuß nach einem der vorhergehenden Ansprüche,
**dadurch gekennzeichnet,**
**dass** die Säule (30) aus einem an dem Fußabschnitt (1, 2) angebrachten Außenprofil (3) und einem darin teleskopartig verschieblich gelagerten, in verschiedenen Stellungen festlegbaren Innenprofil (4) zusammengesetzt ist und dass das Profilelement von dem Innenprofil (4) gebildet ist.

6. Standfuß nach Anspruch 5,
**dadurch gekennzeichnet,**
**dass** die Innenkontur des Außenprofils (3) im Querschnitt abschnittsweise an die Außenkonturen in ihrer Querschnittsform unterschiedlicher Innenprofile (4) derart angepasst ist, dass die verschiedenen Innenprofile (4) jeweils mit mindestens drei in Umfangsrichtung voneinander beabstandeten Außenkonturabschnitten (4.1, 4.2) an mindestens drei gegeneinander versetzten Innenkonturabschnitten (3.1, 3.2) in Querrichtung unverkippbar, über die Länge flächig, abgestützt sind.

## Claims

1. Stand having a column (30) which is fitted on a foot portion (1, 2) and has at least one profile element (4), on the upper end portion of which column a head unit (7) is mounted with a pivot element (23) which can be tilted about a horizontal pivot axis (24) and can be clamped securely in a desired tilted position, which pivot element carries a receiving element (9) on its upper side, the head unit (7) having a pin (21) which protrudes into a longitudinally extending cavity of the profile element (4) and is fitted in a stationary manner relative to the upper end portion of the profile element, said pin being provided with an upwardly open vertical gap (26) into which the pivot element (23), which is configured as a plane-parallel plate, is inserted and mounted, the thickness of the pivot element (23) being adapted to the clear width of the gap (26) and the pivot axis (24) protruding through the pin (21) with the pivot element (23) in the region of the gap (26) in the normal direction and the pivot element (23) protruding beyond the upper end-side of the pin (21),
**characterised in that**
a clamping boring (25) which opens into the gap (26) in the region of the inserted pivot element (23) is introduced in the gap region of the pin (21) parallel to the pivot axis (24) and
**in that** a clamping bolt (8.1), which has a thread, of a manually adjustable clamping lever (8) is guided transversely through the profile element (4), said clamping lever being screwed into a thread which is introduced in the profile element or into a separate threaded part (8.2) and being able to be clamped securely with its end-side against the pivot element (23) in order to establish a desired inclination of the receiving element (9).

2. Stand according to claim 1,
**characterised in that**
a flange-like or annular mounting part (22) is fitted on the upper end-side or on the lateral end region of the pin (21), which mounting part (22) protrudes laterally beyond the pin (21) like a collar and with which the pin (21) is mounted on the upper end-side of the profile element (4).

3. Stand according to claim 2,
**characterised in that**
the mounting part (22) is welded or screwed onto the profile element (4), longitudinally extending screw channels (4.3) being provided for the screw connection in the cavity of the profile element (4).

4. Stand according to one of the preceding claims,
**characterised in that**
the threaded part (8.2) is inserted into a longitudinally extending receiving groove (4.5) which is introduced in the cavity of the profile element (4).

5. Stand according to one of the preceding claims,
**characterised in that**
the column (30) is composed of an outer profile (3), which is fitted on the foot portion (1, 2), and of an inner profile (4), which is mounted displaceably therein in a telescopic manner and can be fixed securely in different positions and
**in that** the profile element is formed by the inner profile (4).

6. Stand according to claim 5,
**characterised in that**
the inner contour of the outer profile (3) is adapted in cross-section in portions to the outer contours in their cross-sectional form of different inner profiles (4) in such a manner that the different inner profiles (4) respectively are supported with at least three outer contour portions (4.1, 4.2) which are at a spacing from each other in the circumferential direction on at least three mutually offset inner contour portions (3.1, 3.2), non-tiltable in the transverse direction and flat across the length.

## Revendications

1. Pied avec une colonne (30) montée sur une base (1, 2), comportant au moins un élément profilé (4), à l'extrémité supérieure de laquelle est fixée une unité tête (7) avec un élément pivotant (23) inclinable autour d'un axe pivotant (24) horizontal et qui peut être bloqué dans une position inclinée souhaitée, lequel élément pivotant porte sur sa partie supérieure un élément de réception (9), l'unité tête (7) présentant un pivot (21) faisant saillie dans une cavité de l'élément profilé (4) s'étendant longitudinalement, monté de manière fixe par rapport à l'extrémité supérieure de l'élément profilé, lequel pivot est pourvu d'une fente (26) verticale ouverte vers le haut, dans laquelle est inséré et logé l'élément pivotant (23) conçu comme une plaque à faces planes et parallèles, l'épaisseur de l'élément pivotant (23) étant adaptée à la largeur intérieure de la fente (26) et l'axe pivotant (24) traversant perpendiculairement le pivot (21) avec l'élément pivotant (23) dans la zone de la fente (26) et l'élément pivotant (23) dépassant de la face frontale supérieure du pivot (21),
**caractérisé en ce**
**que**, dans la zone de la fente du pivot (21), un trou de serrage (25) débouchant dans la fente (26) dans la zone de l'élément pivotant (23) introduit est percé parallèlement à l'axe pivotant (24), et
en ce qu'un boulon de serrage (8.1) d'un levier de serrage (8) présentant un filetage réglable manuellement est monté en travers de l'élément profilé (4), lequel levier de serrage est vissé dans un filetage réalisé dans l'élément profilé ou dans la pièce filetée (8.2) à part et peut être bloqué avec sa face frontale contre l'élément pivotant (23) pour déterminer une inclinaison souhaitée de l'élément de réception (9).

2. Pied selon la revendication 1,
**caractérisé en ce**
**qu'**une pièce de fixation (22) de type bride ou en forme d'anneau est montée sur la face frontale supérieure du pivot (21) ou à son extrémité latérale, laquelle pièce dépasse le pivot (21) latéralement comme une collerette et à l'aide de laquelle est fixé le pivot (21) sur la face frontale supérieure de l'élément profilé (4).

3. Pied selon la revendication 2,
**caractérisé en ce**
**que** la pièce de fixation (22) est soudée ou vissée à l'élément profilé (4), des canaux de vissage (4.3) s'étendant longitudinalement étant prévus à des fins de vissage dans la cavité de l'élément profilé (4).

4. Pied selon l'une des revendications précédentes,
**caractérisé en ce**
**que** la pièce filetée (8.2) est introduite dans une gorge de réception (4.5) s'étendant longitudinalement, usinée dans la cavité de l'élément profilé (4).

5. Pied selon l'une des revendications précédentes,
**caractérisé en ce**
**que** la colonne (30) est constituée d'un profilé externe (3) monté sur la base (1, 2) et d'un profilé interne (4) logé dedans de façon mobile télescopiquement, pouvant être fixé dans des positions diverses, et en ce que l'élément profilé est formé par le profilé interne (4).

6. Pied selon la revendication 5,
**caractérisé en ce**
**que** le contour intérieur du profilé externe (3) est adapté, en coupe transversale par section, aux contours extérieurs de divers profilés internes (4) dans leur forme transversale de sorte que les divers profilés intérieurs (4) soient respectivement en appui, avec au moins trois sections de contours extérieurs (4.1, 4.2) espacées les unes des autres dans le sens périphérique, contre au moins trois sections de contours intérieurs (3.1, 3.2) décalées les unes par rapport aux autres sans pouvoir s'incliner dans le sens transversal, sur toute la longueur.
